# EUROPÄISCHE PATENTANMELDUNG

(11) **EP 1 341 117 A1**
(43) Veröffentlichungstag der Anmeldung: **03.09.2003**
(21) Anmeldenummer: 02027376.9
(22) Anmeldetag: 09.12.2002
(51) Int. Cl.: G06K 7/00, G06K 17/00, G06K 19/10, G06K 19/077

(54) **Kommunikationsanordnung und Verfahren zur Informationsübertragung**

(30) Priorität: 15.02.2002 DE 10206233
(71) Anmelder: ROBERT BOSCH GMBH, 70442 Stuttgart (DE)
(72) Erfinder: Wolter, Roland, 31134 Hildesheim (DE)

(57) **Zusammenfassung**

Vorgeschlagen wird eine Kommunikationsanordnung zur Informationsübertragung zwischen einer weiteren Baugruppe oder Funktionseinheit (3) eines eine erste Baugruppe oder Funktionseinheit und eine Lese- oder Schreib-/Lesevorrichtung (4) für Chipkarten (9) aufweisenden elektrischen Geräts (1) oder Geräteverbunds und einer Auswertevorrichtung (10),
wobei die Lese- oder Schreib-/Lesevorrichtung (4) erste Gegenkontakte (5) zur Kontaktierung einer erste Kontakte aufweisenden Chipkarte (9) aufweist, wobei die ersten Kontakte mit der ersten Baugruppe oder Funktionseinheit des Geräts (1) oder Geräteverbunds verbunden sind,
wobei die Lese- oder Schreib-/Lesevorrichtung (4) weitere Gegenkontakte (6) aufweist, die elektrisch und räumlich von den ersten Gegenkontakten (5) getrennt und diesen benachbart und in der gleichen Ebene wie die ersten Gegenkontakte (5) angeordnet sind,
wobei eine Adapterkarte (8) mit ersten und weiteren Kontakten vorgesehen ist, wobei erste (8-5) und weitere (8-5) Kontakte auf der Adapterkarte (8) derart angeordnet sind, daß diese bei in die Lese- oder Schreib-/Lesevorrichtung (4) eingeschobener Adapterkarte (8) durch die ersten (5) und die weiteren (6) Gegenkontakte kontaktiert werden,
wobei die Auswerteeinrichtung (10) zum Informationsaustausch mit dem Gerät (1) mit den ersten (8-5) und den weiteren Kontakten (8-6) der Adapterkarte (8) verbunden oder verbindbar ist.

## Beschreibung

### Stand der Technik

Die Erfindung geht von einer Kommunikationsanordnung und einem Verfahren zum Informationsaustausch nach der Gattung der unabhängigen Patentansprüche aus.

Aus DE 196 33 785 A1 ist ein Diagnosverfahren für elektrische Geräte, die über eine Leseeinheit für Chipkarten verfügen, bekannt, bei dem nach Kontaktierung der Chipkarte durch den Chipkartenleser des Geräts eine auf einer Chipkarte gespeicherte Testroutine in das Gerät eingelesen und dort abgearbeitet wird.

Aus DE 196 32 197 A1 ist ein Verfahren zur Durchführung eines Softwareupdate bei einem über eine Leseeinheit für Chipkarten verfügenden Gerät bekannt, bei dem auf einer Chipkarte gespeicherte oder der Chipkarte über eine Datenverbindung von einer externen Speichereinrichtung, beispielsweise einem PC, zugeführte Programmdaten über die Leseeinrichtung des Geräts von der Chipkarte in einen Programmspeicher des Geräts gelesen werden.

Den Verfahren beider genannter Druckschriften ist gemeinsam, daß während der Durchführung der beschriebenen Diagnose- bzw. Updateverfahren die Kartenleseeinheit des Geräts zur Aufnahme einer für den gewöhnlichen Betrieb des Geräts vorgesehenen Chipkarte nicht zur Verfügung steht. Damit stehen auch die für den gewöhnlichen Betrieb des Geräts auf der entsprechenden Chipkarte abgelegten Daten während der beschriebenen Verfahren nicht zur Verfügung.

DE 196 24 079 C1 offenbart eine Leseeinrichtung für Chipkarten, in deren Kartenschacht gleichzeitig zwei Chipkarten mit voneinander abgewandten Vorderseiten, also Rückseite an Rückseite, einbringbar sind. Um beide Chipkarten, die Daten für voneinander unabhängige Anwendungen, wie beispielsweise TMC-Decodierung und Mobiltelefonie, aufweisen können, gleichzeitig und unabhängig voneinander kontaktieren zu können, sind innerhalb des Kartenschachts sowohl an dessen Oberseite, als auch an der Unterseite Gegenkontakte zur Kontaktierung der auf den Vorderseiten der Chipkarten angeordneten Kontaktflächen angeordnet. Um auch einen sicheren Zugriff auf eine alleinige in den Kartenschacht eingebrachte Chipkarte zu ermöglichen, ist eine federnd gelagerte Andruckplatte zum Anpressen der Chipkarte an die im Kartenschacht angeordneten Gegenkontakte vorgesehen.

Die Forderung nach einer gleichzeitigen Einbringbarkeit zweier Chipkarten in dieselbe Chipkartenleseeinrichtung bedingt ein erhöhtes Bauvolumen der Leseeinrichtung, da bereits der Kartenschacht mindestens die Höhe zweier übereinander gestapelter Chipkarten aufweisen muß. Hinzu kommen weitere Anforderungen an das benötigte Bauvolumen und zusätzlicher konstruktiver Aufwand infolge des Erfordernisses zur Halterung zweier Gegenkontaktgruppen ober- und unterhalb des Kartenschachts sowie für die Andruckplatte.

DE 199 43 060 C1 offenbart ein Gegenkontaktmodul zur Verwendung in einer Leseeinrichtung für Chipkarten, wobei das Gegenkontaktmodul zur Kontaktierung von über ein ISO-Kontaktfeld verfügenden Chipkarten ebenso geeignet ist, wie zur alternativen Kontaktierung von über ein MMC-Kontaktfeld verfügenden Chipkarten. Dazu verfügt das Gegenkontaktmodul über erste Gegenkontakte zur Kontaktierung von ISO-Chipkarten und darüber hinaus über weitere, den ersten Kontakten benachbarte Gegenkontakte, die eine zusätzliche Kontaktierung der über das ISO-Kontaktfeld hinausragenden Kontakte von MMC-Karten ermöglichen.

### Vorteile der Erfindung

Die Kommuniktionsanordnung mit den Merkmalen des unabhängigen Patentanspruchs 1 hat den Vorteil, daß mit geringem konstruktivem und produktionstechnischem Aufwand sowie unveränderten Anforderungen an das für eine Lese- oder Schreib-/Lesevorrichtung benötigte Bauvolumen eine zusätzliche Schnittstelle zum Zugriff auf weitere Baugruppen oder Funktionseinheiten eines Geräts oder Geräteverbunds geschaffen wird.

Von Vorteil ist dabei, daß gleichzeitig sowohl die Informationen einer für den gewöhnlichen Betrieb des Geräts verwandten Chipkarte über die Chipkarte-Schnittstelle zur Verfügung, als auch eine Auswertevorrichtung über denselben Chipkartenleser oder Schreib-/Lesevorrichtung für Chipkarten des Geräts mit diesem kommunizieren kann. Somit stehen beispielweise im Falle einer Gerätediagnose mittels eines von der Auswertevorrichtung aufgespielten und überwachten Diagnoseprogramms auch die Daten der für den gewöhnlichen Betrieb des Geräts benötigten Chipkarte zur Verfügung.

Ein geringes Bauvolumen, vor allem geringe Bauhöhe oder Breite, ist insbesondere bei zum Einbau und Betrieb in Kraftfahrzeugen vorgesehenen elektrischen Geräten oder Geräteverbünden, also beispielsweise vernetzten Komponenten eines Fahrerinformationssystems im weiteren Sinne, von Vorteil, da diese gewöhnlich, im Falle eines Geräteverbunds zumindest teilweise, in einer Mittelkonsole oder im Armaturenbrett des Fahrzeugs eingebaut werden, wo aufgrund weiterer, im Einsicht- und Zugriffsbereich des Fahrzeugführers anzuordnender Bedienelemente für zum Beispiel Klimaanlagensteuerung, Monitor für ein Fahrzeugnavigationsgerät, üblicherweise wenig Platz zur Verfügung steht und demzufolge eine Vielzahl von Bedien- und Anzeigelementen auf engstem Raum untergebracht werden müssen.

Werden die ersten Gegenkontakte im Sinne geringer Produktionskosten unmittelbar auf eine Haupt- oder Nebenleiterplatte des elektrischen Geräts oder eines Geräts des Geräteverbunds angeordnet, steht die Fläche der Leiterplatte im Bereich der Lese- oder Schreib/Lesevorrichtung regelmäßig für die Bestückung mit weiteren elektrischen Bauteilen nicht zur Verfügung, da diese mit einer in die Lese- oder Schreib-/Lesevorrichtung eingeschobenen Chipkarte kollidieren würden. Die Erfindung ermöglicht in vorteilhafter Weise eine Nutzung zumindest eines Teils der für die Lese- oder Schreib-/Lesevorrichtung freizuhaltenden Leiterplattenfläche durch die weiteren Gegenkontakte.

Dazu ist es bei einem elektrischen Gerät oder Geräteverbund mit einer Lese- oder Schreib-/Lesevorrichtung für Chipkarten mit ersten Kontakten, zu deren Kontaktierung die Lese- oder Schreib-/Lesevorrichtung korrespondierende erste Gegenkontakte aufweist, die eine erste Schnittstelle zur Kontaktierung einer ersten Baugruppe oder Funktionseinheit des Geräts oder Geräteverbunds bilden, wobei die Lese- oder Schreib-/Lesevorrichtung weitere Gegenkontakte aufweist, die von den ersten Gegenkontakten räumlich und elektrisch getrennt angeordnet sind, vorgesehen, daß die weiteren Gegenkontakte den ersten Gegenkontakten benachbart in, zumindest im wesentlichen, derselben Ebene wie die ersten Gegenkontakte angeordnet sind, und daß die weiteren Gegenkontakte eine weitere Schnittstelle zur Kontaktierung einer weiteren Baugruppe oder Funktionseinheit des Geräts oder Geräteverbunds darstellen.

Eine Kommunikationsanordnung mit den Merkmalen des unabhängigen Patentanspruchs hat weiterhin den Vorteil, daß ein Zugriff auf eine weitere Baugruppe nur mittels einer speziell ausgebildeten Chipkarte möglich ist, deren entsprechende weitere Kontakte so angeordnet sind, daß sie mit den weiteren Gegenkontakten der Lese- oder Schreib/Lesevorrichtung kontaktieren können. Eine zusätzliche Sicherung vor unberechtigtem Zugriff auf die weitere Baugruppe oder Funktionseinheit wird somit bereits dadurch erzielt, daß die hierfür zusätzlich auf der Chipkarte vorzusehenden weiteren Kontakte außerhalb des Bereichs liegen müssen, der für die Kontakte einer für den gewöhnlichen Betrieb vorgesehenen Standard-Chipkarte vorgesehen ist. Die mögliche geringe Bauhöhe des Kartenschachts der Lese- oder Schreib-/Lesevorrichtung des erfindungsgemäßen Geräts oder Geräteverbunds erschwert dabei ein Ausspähen der Lage der weiteren Gegenkontakte innerhalb der Lese- oder Schreib-/Lesevorrichtung, so daß das Anfertigen einer gefälschten Adapterkarte zum Zugriff auf die weitere Baugruppe oder Funktionseinheit erschwert wird.

Eine zusätzliche Erschwernis zur Anfertigung einer Adapterkartenfälschung ist dadurch erreichbar, daß die Lage der weiteren Gegenkontakte innerhalb des Kartenschachts der Lese- oder Schreib-/Lesevorrichung beispielsweise von Gerätetyp zu Gerätetyp variiert wird. Dies erfordert zwar eine Mehrzahl von Adapterkarten, andererseits ist daran gedacht, diese ohnehin nur einem begrenzten Personenkreis, etwa autorisierten Fachhändlern oder -werkstätten zur Verfügung zu stellen, die zum Zugriff auf die weitere Baugruppe oder Funktionseinheit des Geräts oder Geräteverbunds berechtigt sind.

Weiterhin ist es von Vorteil, wenn bei der Lese- oder Schreib-/Lesevorrichtung des elektrischen Geräts oder Geräteverbunds die ersten Gegenkontakte über eine Leiterplattenoberfläche erhaben, insbesondere senkrecht zur Leiterplattenoberfläche federnd, ausgebildet sind, und daß die weiteren Gegenkontakte als Leiterbahnabschnitte oder Pads auf einer Leiterplattenoberfläche ausgebildet sind.

Somit kann der Aufwand zum Vorsehen der weiteren Gegenkontakte auf Produktionsschritte verlagert werden, in denen sie abgesehen von einer einmaligen Änderung des Layouts keine oder nur geringste Mehrkosten verusachen, nämlich das Leiterplattenlayout und die Umsetzung des Layouts in noch unbestückte Leiterplatten.

Zwar wird dadurch der Aufwand zur Herstellung und auch zur sachgerechten Lagerung einer entsprechend ausgebildeten Adapterchipkarte aufgrund der über die Oberfläche der Adapterchipkarte erhabenen weiteren Kontakte erhöht, jedoch kann vorteilhaft vorgesehen sein, solchermaßen ausgestaltete Adapterkarten nur einem begrenzten Personenkreis, etwa autorisierten Händlern oder Vertragswerkstätten, zugänglich zu machen, so daß die Zahl der Adapterkarten gegenüber der der über einen entsprechenden Chipkartenleser verfügenden Geräte vernachlässigbar ist. Die Gesamtkosten für diese Lösung sind also geringer als für den Fall, daß die weiteren Gegenkontakte der Lese- oder Schreib-/Lesevorrichtung ebenso wie deren erste Gegenkontakte ausgebildet sind.

Darüber hinaus ist die Lage von Leiterbahnabschnitten oder Pads innerhalb des Kartenschachts der Lese- oder Schreib/Lesevorrichtung schwerer auszuspähen als diejenige von erhabenen Gegenkontakten. Die Anfertigung eines Adapters zur Kontaktierung der weiteren Gegenkontakte für Unberechtigte ist dadurch zusätzlich erschwert.

In diesem Zusammenhang ist es weiterhin von Vorteil, wenn die Lese- oder Schreib-/Lesevorrichtung des elektrischen Geräts oder des Geräteverbunds einen Transportschlitten aufweist, der zur Aufnahme einer durch die Lese- oder Schreib-/Lesevorrichtung zu kontaktierenden Chipkarte und zum Transport der Chipkarte in eine Auswertestellung, in der die Kontakte der Chipkarte durch die ersten Gegenkontakte der Lese- oder Schreib-/Lesevorrichtung kontaktiert sind, dient. Solche Transportschlitten sind bei Leseeinrichtungen für Chipkarten gemäß dem Stand der Technik ohnehin häufig anzutreffen und gewährleisten einen weiteren Sichtschutz.

Besonders vorteilhaft ist es dabei, einen solchen Transportschlitten derart zu modifizieren, daß er in seiner Entnahmeposition, in der eine auszuwertende Chipkarte einlegbar oder entnehmbar ist, und in der Auswertestellung zumindest die weiteren Gegenkontakte der Lese- oder Schreib/Lesevorrichtung verdeckt. Dies ist durch Anbringen einfacher Blendenelemente am Transportschlitten erreichbar.

Weiterhin ist es von Vorteil, bei einem elektrischen Gerät oder Geräteverbund eine Sperrvorrichtung vorzusehen, die eine Verbindung zwischen den weiteren Gegenkontakten der Lese- oder Schreib-/Lesevorrichtung und der weiteren Baugruppe oder Funktionseinheit nur dann freigibt, wenn eine Überprüfung über die ersten Gegenkontakte gelesener Zugangsberechtigungsdaten durch die erste Baugruppe oder Funktionseinheit positiv ausfällt.

Dies gilt besonders dann, wenn die Zugangsdaten permanent oder wiederholt geprüft werden, so daß eine entsprechende für den gewöhnlichen Betrieb des Geräts oder Geräteverbunds benötigte Chip- oder Speicherkarte, auf der die Zugangsdaten gespeichert sind, während des Zugriffs auf die weitere Baugruppe in der Lese- oder Schreib-/Lesevorrichtung verbleiben muß.

### Zeichnung

Ausführungsbeispiele der Erfindung sind in den Figuren dargestellt und werden nachfolgend näher erläutert. Gleiche Bezugszeichen in den Figuren bezeichnen dabei gleiche Teile oder Baugruppen.

### Es zeigen

Figur 1 ein Kommuniktionssystem zur Herstellung und Abwicklung eines Informationsaustauschs zwischen einem über eine Lese- oder Schreib-/Lesevorrichtung für Chipkarten verfügendenen elektrischen Gerät oder Geräteverbund und einer Auswerteeinrichtung über eine Adapterkarte, die durch die Lese- oder Schreib-/Lesevorrichtung einerseits und die Auswerteeinrichtung kontaktiert ist,
Figur 2 einen Längsschnitt durch die Schreib/Lesevorrichtung und eine in die Schreib-/Lesevorrichtung eingelegte und durch diese kontaktierte Adapterkarte,
Figur 3 die Leiterplatte des elektrischen Geräts mit darauf angeordneter Lese- oder Schreib-/Lesevorrichtung,
Figur 4 die Leiterplatte des elektrischen Geräts mit darauf angeordneter Lese- oder Schreib-/Lesevorrichtung und in die Lese- oder Schreib-/Lesevorrichtung eingebrachter Chipkarte in Auswertestellung,
Figur 5 die Leiterplatte des elektrischen Geräts mit darauf angeordneter Lese- oder Schreib-/Lesevorrichtung und in die Lese- oder Schreib-/Lesevorrichtung eingebrachter Adapterkarte in Auswertestellung,
Figur 6 eine vorteilhafte Ausbildungsform einer Adapterkarte in Schräg-Aufsicht,
Figur 7 dieselben vorteilhafte Ausführungsform der Adapterkarte in Schräg-Untersicht.

### Beschreibung der Ausführungsbeispiele

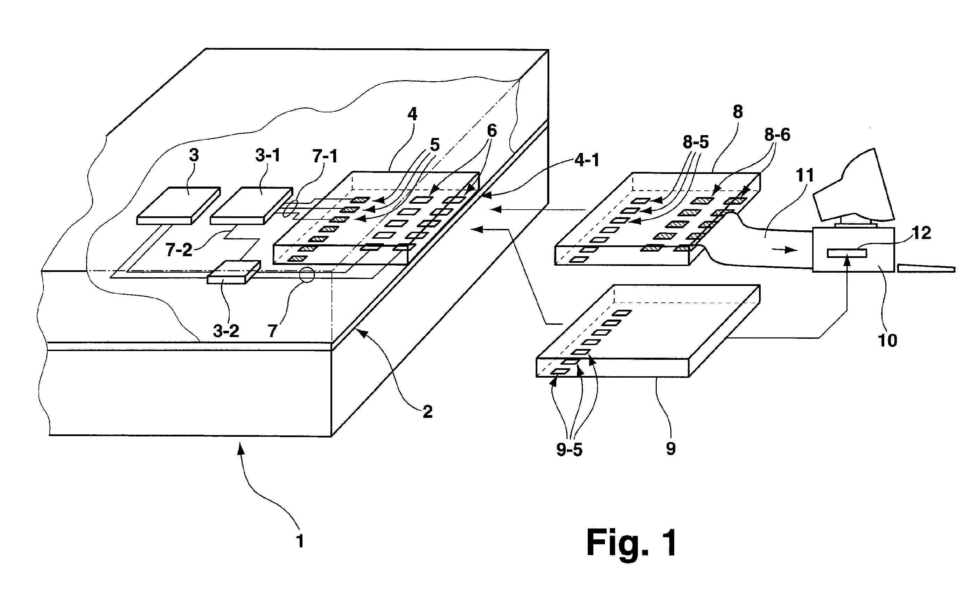

In Figur 1 stellt der mit dem Bezugszeichen "1" bezeichnete Block ein elektrisches Gerät oder einen Geräteverbund dar. Bei dem elektrischen Gerät handelt es sich beispielsweise um ein Fahrerinformationssystem im weiteren Sinne zur Installation und zum Betrieb in einem Kraftfahrzeug. Der Begriff Fahrerinformationssystem umfaßt im vorliegenden Fall beispielsweise die Funktionalität eines Fahrzeugnavigationssystems zur Leitung eines Fahrzeugführers entlang einer aufgrund Karteninformationen und gegebenenfalls zusätzlicher, wie beispielsweise Informationen über Verkehrsstörungen, berechneten Fahrtroute mittels optisch und/oder akustisch ausgegebener Fahrtanweisungen von einem aktuellen Stand- zu einem Zielort. Der Begriff Fahrerinformationssystem umfaßt weiterhin beispielsweise die Funktionalität einer Audiound/oder Videoanlage zum Empfang und zur Wiedergabe von Rundfunksignalen und/oder zur Wiedergabe von auf Informationsträgern, wie Compact Cassetten (CC), Compact Discs (CD), Digital Versatile Discs (DVD) oder vergleichbaren Medien gespeicherten Audio- und/oder Videosignalen. Der Begriff Fahrerinformationssystem umfaßt weiterhin die Funktionalität einer Kommunikationsschnittstelle, insbesondere in Form eines Mobiltelefons mit Freisprecheinrichtung, wobei die empfangenen Signale über Lautsprecher einer Audio- und/oder Videoanlage wiedergebbar sind. Diese Aufzählung von durch den Begriff Fahrerinformationsystem abgedeckten Funktionalitäten ist beispielhaft und keinesfalls einschränkend zu verstehen.

Diese und weitere Funktionaltitäten können in einer einzigen Geräteeinheit integriert sein. Im Falle eines Geräteverbunds können sie aber auch auf eine Mehrzahl von Geräten, Baugruppen oder Funktionseinheiten verteilt sein, die miteinander durch Leitungen oder Datenbusse verbunden sind. Ein Beispiel für einen solchen Geräteverbund stellt beispielsweise eine Audioanlage für ein Kraftfahrzeug dar, bei der eine Anzeige- und Bedieneinheit im Armaturenbrett oder der Mittelkonsole des Kraftfahrzeugs angeordnet ist, in der ein Rundfunkempfänger in einem Antennenfuß einer auf dem Fahrzeugdach befestigten Fahrzeugantenne und beispielsweise eine Abspieleinheit für CDs oder DVDs, ein Klangprozessor zur Klangbeeinfussung und zur Erzeugung von Raumklangeefekten sowie eine NF-Endstufe, an die in der Fahrgastzelle angeordnete Lautsprecher über Kabel angeschlossen sind, im Kofferraum des Fahrzeugs angeordnet sind, wobei die genannten Komponenten über einen Bus miteinander verbunden sind und beispielsweise die Audiosignale von Rundfunkempfänger und Abspieleinheit dem Klangprozessor in digitaler Form über den Bus zugeführt werden, während Steuersignale, beispielsweise zur Auswahl eines zu empfangenden Rundfunksenders oder zur Auswahl einer CD und eines Musikstücks auf einer CD von der Bedieneinheit dem Rundfunkempfänger bzw. der Abspieleinheit über den Bus übermittelt werden.

Alternativ kann der Geräteverbund beispielsweise auch aus einem Fahrerinformationssystem, umfassend Anzeige- und Bedienelemente und einer Lese- oder Schreib-/Lesevorrichtung 4 für Chipkarten, die im Armaturenbrett oder der Mittelkonsole des Fahrzeugs angeordnet sind, einer im Motorraum angeordneten Motorsteuerung, einer im oder am Getriebegehäuse angeordneten Getriebesteuerung sowie über das Fahrzeug verteilten Sensoren, zum Beispiel ABS-Sensoren, bestehen, wobei die genannten Komponenten untereinander über einen Bus, etwa einen CAN-Bus, miteinander verbunden sind.

Die bevorzugten Ausführungsbeispiele werden nachfolgend vereinfachend vorwiegend anhand des elektrischen Geräts 1 beschrieben, gelten aber in analoger Form auch für den Geräteverbund.

Das elektrische Gerät 1 verfügt über eine Leiterplatte 2, auf der in Figur 1 nicht dargestellte elektrische Bauelemente und diese verbindende Leiterbahnen angeordnet sind. Weiter sind auf der Leiterplatte 2 des elektrischen Geräts erste Gegenkontakte 5 angeordnet, die zur Kontaktierung von korrespondierenden ersten Kontakten 9-5 einer Chipkarte 9 vorgesehen sind. Diese Gegenkontakte 5 und ein durch Begrenzungswände und nicht dargestellte Führungselemente gebildeter Kartenschacht 4-1 bilden eine Lese- oder Schreib-/Lesevorrichtung 4 des Geräts 1. Begrenzungswände und Führungselemente dienen dem Positionieren und Halten einer durch die Lese- oder Schreib/Lesevorrichtung auszuwertenden Chipkarte in eine bzw. in einer definierten Position, in der die ersten Kontakte 9-5 der Chipkarte 9 durch die ersten Gegenkontakte 5 der Leseoder Schreib-/Lesevorrichtung kontaktiert sind.

Die ersten Kontakte 9-5 der Chipkarte 9 sind in Form einfacher auf der in Figur 1 unteren Oberfläche der Chipkarte 9 angeordneten Kontaktflächen ausgeführt. Zur Kontaktierung dieser ersten Kontaktflächen 9-5 der Chipkarte 9 sind die ersten Gegenkontakte der Lese- oder Schreib/Lesevorrichtung 4 erhaben ausgeführt, das heißt, diese ragen in zur Leiterplattenoberfläche senkrechter Richtung über die auf der Leiterplattenoberfläche verlaufenden Leiterbahnen hinaus. Vorzugsweise sind die ersten Gegenkontakte in Form senkrecht zur Leiterplattenoberfläche federnder Gegenkontakte 5 ausgeführt. Dies stellt sicher, daß auch bei schwankenden Dicken der auszuwertenden Chipkarten oder bei Spiel in der Führung durch die erwähnten Führungselemente eine sichere Kontaktierung der ersten Kontakte 9-5 der Chipkarte 9 gewährleistet ist.

Die ersten Gegenkontakte 5 des Lese- oder Schreib/Lesevorrichtung 4 sind über in Figur 1 angedeutete, auf der Leiterplatte angeordnete Leiterbahnen 7-1 mit einer ersten Baugruppe 3-1 des elektrischen Geräts 1 verbunden. Bei der ersten Baugruppe 3-1 des elektrischen Geräts handelt es sich bei vorliegendem Ausführungsbeispiel um einen Prozessor, der beispielsweise über die ersten Gegenkontakte 5 von der für den gewöhnlichen Betrieb des Geräts 1 vorgesehenen Chipkarte 9 gelesene Zugangsberechtigungsdaten mit im Gerät 1 gespeicherten Daten abgleicht und eine Inbetriebnahme des Geräts 1 nur dann freischaltet, wenn der Benutzer aufgrund der von der Chipkarte 9 gelesenen Zugangsberechtigungsdaten als benutzungsberechtigt identifiziert worden ist.

Unter dem gewöhnlichen Betrieb beispielsweise einer in einem Kraftfahrzeug betriebenen Audioanlage wird dabei beispielsweise der Empfang und die Wiedergabe eines Rundfunkprogramms, die Wiedergabe von auf einer CD oder DVD gespeicherten Audiosignalen o. ä. verstanden.

Der Chipkartenleser 4 des elektrischen Geräts 1 umfaßt weiterhin weitere Gegenkontakte 6, die wie die ersten Gegenkontakte 5 auf der Leiterplatte 2 des elektrischen Geräts im Bereich des Kartenschachts 4-1, den Gegenkontakten 5 benachbart, angeordnet sind. Diese weiteren Gegenkontakte 6 können ebenso wie die ersten Gegenkontakte 5, also über die Leiterplattenoberfläche erhaben, insbesondere senkrecht zu dieser federnd, ausgeführt sein. Bei dem hier beschriebenen bevorzugten Ausführungsbeispiel der Erfindung sind demgegenüber die weiteren Gegenkontakte 6 als Endabschnitte von auf der Leiterplattenoberfläche verlaufenden weiteren Leiterbahnen 7, die in der Figur nur angedeutet sind, oder als mit weiteren Leiterbahnen 7 verbundene Pads ausgeführt.

Die beschriebenen weiteren Gegenkontakte 6 der Lese- oder Schreib-/Lesevorrichtung 4 sind über die weiteren in der Figur nur angedeuteten Leiterbahnen 7 über eine Sperrvorrichtung 3-2 mit einer weiteren Baugruppe oder Funktionseinheit 3 des elektrischen Geräts 1 verbunden. Bei der weiteren Baugruppe 3 des elektrischen Geräts 1 kann es sich beispielsweise um einen Programmspeicher eines softwaregesteuerten Geräts 1 handeln, wobei die im Programmspeicher 3 abgelegte Betriebssoftware durch den Prozessor 3-1 zur Steuerung der Funktionen des Geräts abgearbeitet wird. Die erste Baugruppe 3-1 des Geräts 1, hier also der Prozessor, ist über eine Freigabeleitung 7-2 mit der Sperrvorrichtung 3-2 verbunden.

Die genannten Baugruppen oder Funktionseinheiten 3, 3-1 und 3-2 können jeweils als einzelne Baugruppen, alternativ aber auch in Form von in einer einzigen Baugruppe realisierten Funktionseinheiten, insbesondere als Softwaremodule in einem gemeinsamen Prozessor, realisiert sein. Die in Figur 1 vorgenommene physische Trennung der Baugruppen dient nur der Übersichtlichkeit der Darstellung, ist aber keinerwegs zwingend.

Die Sperrvorrichtung 3-2 hat die Aufgabe, unberechtigte Zugriffe auf die weitere Baugruppe 3 des Geräts 1 zu verhindern. Dazu ist es vorgesehen, daß die Verbindung 7 zwischen den weiteren Gegenkontakten 6 der Lese- oder Schreib-/Lesevorrichtung 4 und der weiteren Baugruppe 3 oder Funktionseinheit 3 nur dann freigegeben wird, wenn eine Überprüfung der über die ersten Gegenkontakte 5 von einer Adapaterkarte 8 über deren korrespondierende erste Kontakte 8-5 gelesenen Zugangsberechtigungsdaten, die anstelle der für den gewöhnlichen Betrieb vorgesehenen Chipkarte 9 in die Lese- oder Schreib-/Lesevorrichtung 4 eingebracht wird, durch die erste Baugruppe oder Funktionseinheit 3-1 positiv ausfällt, also der Benutzer aufgrund der gelesenen Daten als berechtigt erkannt wird.

Die Adapterkarte 8 weist an ihrer in der Figur unteren Oberfläche weitere Kontakte 8-6 auf, die so angeordnet und ausgebildet sind, daß sie bei in den Kartenschacht 4-1 der Lese- oder Schreib-/Lesevorrichtung 4 des elektrischen Geräts 1 eingeführter Adapterkarte 8 mit den weiteren Gegenkontakten 6 der Lese- oder Schreib-/Lesevorrichtung 4 kontaktieren. Dazu ist die Lage der weiteren Kontakte 8-6 der Adapterkarte an die Lage der weiteren Gegenkontakte 6 der Lese- oder Schreib-/Lesevorrichtung 4 angepaßt. Darüber hinaus ist die Ausführung der weiteren Kontakte 8-6 der Adapterkarte 8 an die der weiteren Gegenkontakte 6 der Leseoder Schreib-/Lesevorrichtung 4 angepaßt. Sind also die weiteren Gegenkontakte 6 der Lese- oder Schreib/Lesevorrichtung 4 als Leiterbahnendabschnitte oder Pads ausgeführt, so sind die weiteren Kontakte 8-6 der Adapterkarte 8 in der Form der ersten Gegenkontakte 5 der Lese- oder Schreib-/Lesevorrichtung 4 ausgebildet, also als über die Adapterkartenoberfläche erhabene, insbesondere senkrecht zur Adapterkartenoberfläche federnd ausgebildete Kontakte 8-6.

Die Adapterkarte 8 weist eine weitere Schnittstelle auf, über die ihre ersten und weiteren Kontakte 8-5 und 8-6 mit einer Auswerteeinrichtung 10 verbindbar sind. Bei dem in der Figur dargestellten Ausführungsbeispiel ist diese weitere Schnittstelle in Form einer Zuleitung 11 ausgeführt, die an eine entsprechende Steckverbindung der Auswerteeinrichtung 10 anschließbar ist.

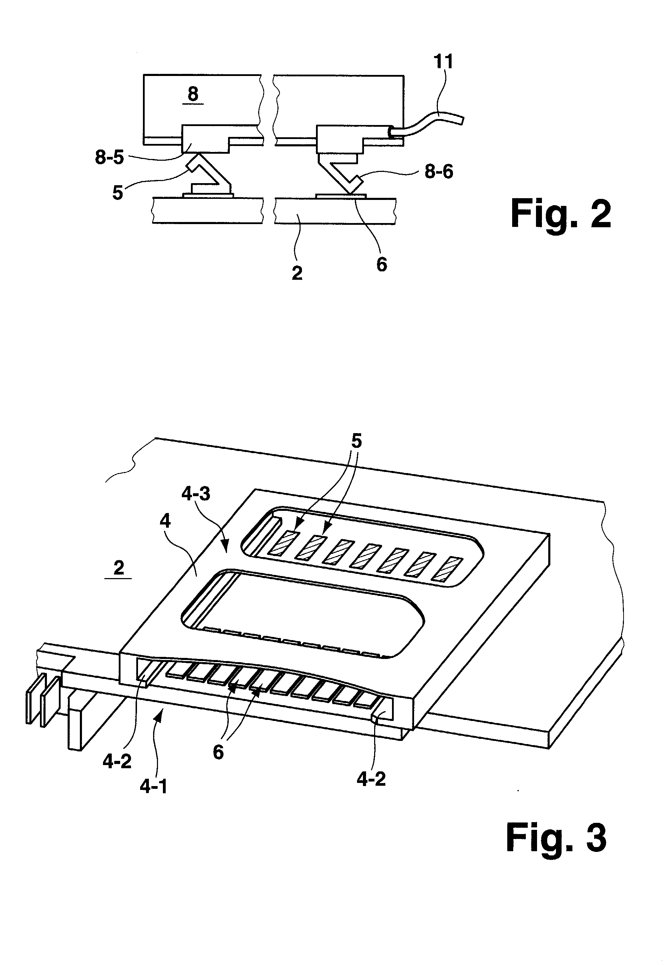

Figur 2 zeigt nochmals einen Schnitt durch die Lese- oder Schreib-/Lesevorrichtung 4 mit darin eingelegter Adapterkarte 8. Die ersten Gegenkontakte 5 der Lese- oder Schreib-/Lesevorrichtung sind zur Kontaktierung korrespondierender, auf der in der Figur unteren Oberfläche angeordneten Kontaktflächen 8-5 als senkrecht zur Oberfläche der Leiterplatte 2 nach federnde Gegenkontakte ausgebildet. Diese werden zusammen mit den übrigen auf die Leiterplatte zu bestückenden Bauelementen in demselben Bestückungsprozeß auf entsprechende Lötpads der Leiterplatte bestückt und anschließend verlötet. Die zweiten Gegenkontakte 6 der Leseoder Schreib-/Lesevorrichtung 4 sind in Form von Leiterbahnabschnitten auf der Leiterplatte 2 realisiert und stehen mit korrespondierenden Federkontakten 8-6, die die weiteren Kontakte 8-6 der Adapterkarte 8 bilden, in Verbindung. Erste und zweite Kontakte 8-5 und 8-6 sind über im Körper der Adapterkarte verlegte Leiterbahnen mit dem Verbindungskabel 11 verbunden.

Figur 3 zeigt eine weitere Ansicht der Lese- oder Schreib/Lesevorrichtung, in der neben den genannten ersten und weiteren Gegenkontakten 5 und 6 Führungsschienen 4-2 an den Seitenwänden des Karteschachts 4-1 zu erkennen sind. Die Führungsschienen 4-2 dienen zusammen mit der in der Figur oberen Begrenzungswand 4-3, also dem Deckel des Kartenschachts Führung einer auszuwertenden Chip- oder Adapterkarte 9, 8 bei deren Verbringung in die Auswertestellung und zur Halterung der Karte in dieser Auswertestellung. Da erste Gegenkontakte 5 der Lese- oder Schreib-/Lesevorrichtung sowie zweite Kontakte der Adapterkarte als Federkontakte ausgeführt sind, also mit einer Federkraft auf die entsprechenden Kontaktflächen 8-5, 9-5 der Karte bzw. der Lese- oder Schreib-/Lesevorrichtung 4 6 aufgepreßt werden, dient die Führung 4-2 zusätzlich zur Halterung der Chip- oder Adapterkarte 8,9 entgegen dieser Federkraft.

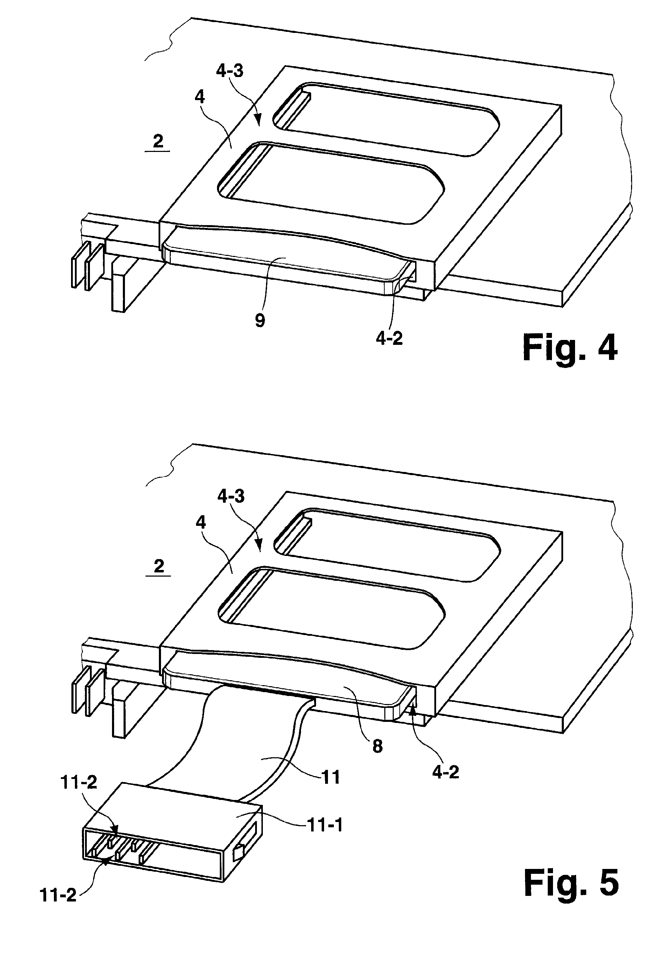

Figur 4 zeigt die Leiterplatte 2 mit Lese- oder Schreib/Lesevorrichung 4, in die eine Chipkarte 9, die für den gewöhnlichen Betrieb vorgesehen ist, eingeschoben ist. Die Chipkarte 9 wird durch die Führungen 4-2 und die obere Begrenzungswand 4-3 des Kartenschachts 4-1 in der Auswertestellung gehalten, in der die ersten Kontakte 9-5 der Chipkarte durch die als Federkontakte ausgeführten ersten Gegenkontakte 5 der Lese- oder Schreib/Lesevorrichtung kontaktiert sind.

Figur 5 zeigt die Leiterplatte 2 des elektrischen Geräts mit Lese- oder Schreib-/Lesevorrichung 4, in die eine Adapterkarte 8 eingeschoben ist. Die Adapterkarte wird durch die Führungen 4-2 und die obere Begrenzungswand 4-3 des Kartenschachts 4-1 in der Auswertestellung gehalten, in der die ersten Kontakte 8-5 der Adapterkarte durch die als Federkontakte ausgeführten ersten Gegenkontakte 5 der Leseoder Schreib-/Lesevorrichtung, des weiteren die als Federkontakte ausgeführten weiteren Kontakte 8-6 der Adapterkarte 8 durch die weiteren, als Leiterbahnendabschnitte ausgeführten weiteren Gegenkontakte 6 der Lese- oder Schreib-/Lesevorrichtung 4 kontaktiert sind. Die ersten 8-5 und die weiteren Kontakte 8-6 der Adapterkarte 8 sind über eine Leitung 11, hier in Form eines Flachbandkabels, mit in der Figur nur angedeuteten Steckkontakten 11-2 eines Steckverbinders 11-1 verbunden. Der Steckverbinder 11-1 ist zur Verbindung mit einer entsprechenden Steckbuchse der Auswertevorrichtung 10 vorgesehen.

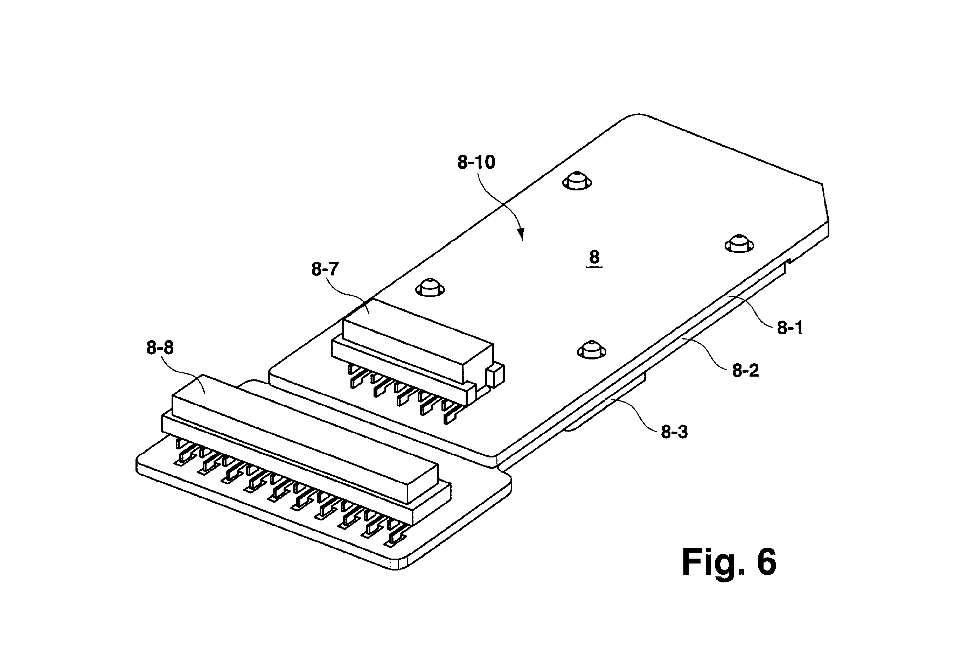

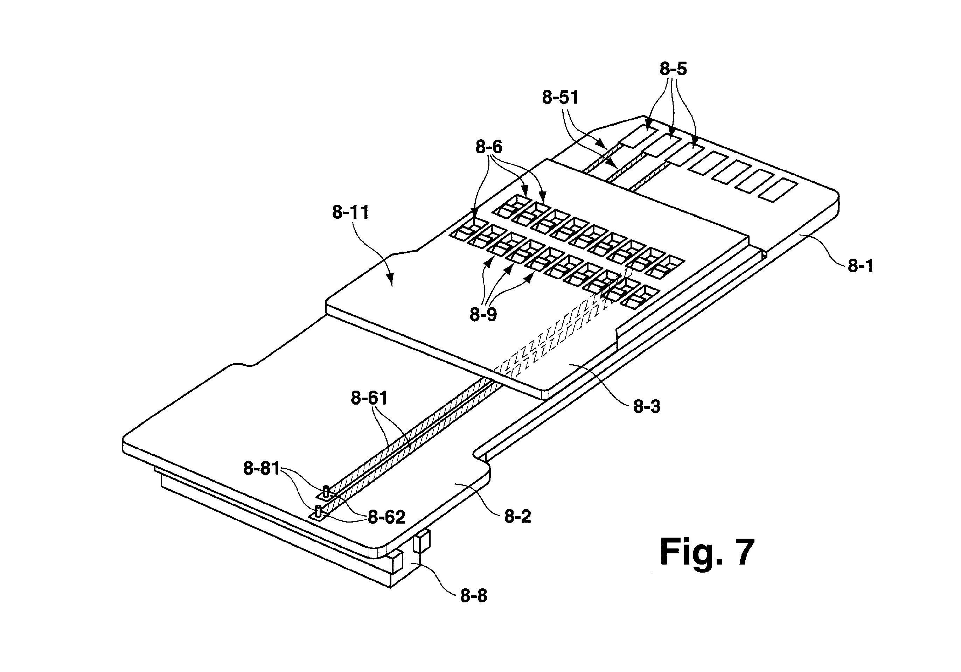

Figur 6 zeigt eine Schräg-Draufsicht, Figur 7 eine Schräg-Druntersicht einer vorteilhaften Ausgestaltung einer Adapterkarte 8. Die dargestellte Weiterbildung der Adapterkarte zeichnet sich dadurch aus, daß sie aus mehreren Schichten 8-1, 8-2 und 8-3, im folgenden als Module bezeichnet, zusammengesetzt ist.

Das erste plattenförmige Adapterkartenmodul 8-1 trägt an seiner in Figur 7 erkennbaren Unterseite 8-11 erste Kontakte 8-5, wie diese in identischer Form auch an der Unterseite einer für den gewöhnlichen Betrieb vorgesehenen Chipkarte 9 vorhanden sind. Im vorliegenden Fall handelt es sich bei den ersten Kontakten 8-5 um ein MMC-Kontaktfeld, also um das Kontaktfeld einer Chipkarte nach dem Multi Media Chipcard(MMC-) Standard. Die ersten Kontakte 8-5 sind dabei in Form elektrisch leitender Kontaktflächen ausgebildet. Die ersten Kontakte 8-5 des ersten Moduls 8-1 sind mit einem auf seiner Oberseite 8-10 angeordneten ersten Steckverbinder 8-7 verbunden. Das erste Adapterkartenmodul 8-1 kann in einfacher Weise in Form einer auf die passenden äußeren Maße zugeschnittenen Leiterplatte ausgeführt sein, an deren Unterseite 8-11 in der Figur nur angedeutete Leiterbahnen 8-51 angeordnet sind, deren erste Endabschnitte die ersten Kontakte 8-5 bilden oder mit diesen verbunden sind. Die zweiten Enden der auf der Unterseite des ersten Adapterkartenmoduls verlaufenden Leiterbahnen bilden Lötpads für den ersten Steckverbinder 8-7 oder sind mit Lötpads für den ersten Steckverbinder verbunden. Durch Einlöten der Lötpins des ersten Steckverbinders 8-7 in die dafür vorgesehenen Lötpads sind somit die ersten Kontakte 8-5 des ersten Adapterkartenmoduls 8-1 mit entsprechenden Kontakten des ersten Steckverbinders 8-7 verbunden. Die Breite des ersten Moduls ist zumindest für den Bereich, der sich in Auswertestellung der Karte 8 innerhalb des Kartenschachts 4-1 der Lese- oder Schreib-/Lesevorrichtung 4 befindet, durch die Breite des Kartenschachts 4-1, also hier durch den Abstand der seitlichen Führungsschienen 4-2 vorgegeben.

Das zweite Modul 8-2 trägt an seiner in Figur 7 erkennbaren Unterseite 8-11 zweite Kontakte 8-6. Diese sind in Form von senkrecht zur Unterseite des zweiten Moduls 8-2 federnden Federkontakten ausgebildet und mit einem auf seiner Oberseite angeordneten zweiten Steckverbinder 8-8 verbunden. Das zweite Adapterkartenmodul 8-2 kann wie das erste in einfacher Weise in Form einer auf die passenden äußeren Maße zugeschnittenen Leiterplatte ausgeführt sein, an deren Unterseite Leiterbahnen angeordnet sind, deren erste Endabschnitte Lötpads für die Federkontakte 8-6 bilden. Die zweiten Enden der auf der Unterseite des zweiten Adapterkartenmoduls 8-2 verlaufenden, in der Figur nur angedeuteten Leiterbahnen 8-61 bilden Lötpads 8-62 für den zweiten Steckverbinder 8-8 oder sind mit Lötpads für den zweiten Steckverbinder verbunden. Durch Einlöten der Lötpins 8-81 des zweiten Steckverbinders 8-8 in die dafür vorgesehenen Lötpads 8-62 sind somit die zweiten Kontakte 8-6 des zweiten Adapterkartenmoduls 8-2 mit entsprechenden Kontakten des zweiten Steckverbinders 8-8 verbunden. Die Breite des zweiten Moduls ist zumindest für den Bereich, der sich in Auswertestellung der Karte 8 innerhalb des Kartenschachts 4-1 der Lese- oder Schreib-/Lesevorrichtung 4 befindet, durch die Breite des Kartenschachts 4-1, also hier durch den Abstand der seitlichen Führungsschienen 4-2 vorgegeben.

Optional kann ein drittes Modul 8-3 vorgesehen sein, dessen Funktion darin besteht, die als Federkontakte ausgebildeten zweiten Kontakte 8-6 der Adapterkarte vor mechanischer Beschädigung zu schützen. Dazu weist das dritte Modul Durchbrüche 8-9 auf, die zueinander so angeordnet sind, wie die zweiten Kontakte des zweiten Moduls 8-2.

Die Adapterkarte 8 setzt sich aus einer Übereinanderstapelung mindestens der ersten beiden Module 8-1 und 8-2, vorteilhafterweise zusätzlich des dritten Moduls 8-3 zusammen. Die oberste Schicht der Adapterkarte bildet dabei das erste Modul 8-1, wobei dessen erste Kontakte 8-5 in Figur 6 nach unten zeigen. Das zweite Modul 8-2 ist unter dem ersten Modul angeordnet, beipielsweise mit diesem verklebt, wobei auch die weiteren Kontakte 8-6 des zweiten Moduls in Figur 6 nach unten zeigen. Erstes und zweites Modul sind relativ zu einander derart angeordnet, daß erste und weitere Kontakte 8-5 und 8-6 der resultierenden Adapterkarte 8 zueinander die gleiche Anordnung aufweisen, wie die ersten und weiteren Gegenkontakte 5 und 6 der Leseoder Schreib-/Lesevorrichtung 4. Die optionale dritte Schicht in Form des dritten Moduls 8-3 ist in Figur 6 unter dem zweiten Modul 8-2 angeordnet derart, daß die weiteren, nämlich Federkontakte 8-6 des zweiten Moduls durch die Durchbrüche 8-9 des dritten Moduls hindurchragen.

Die Dicken der einzelnen Module, insbesondere des ersten und des zweiten Moduls, sind so gewählt, daß die aus ihrer Übereinanderschichtung gebildete Adapterkarte 8 die im wesentlichen gleiche Dicke wie eine herkömmliche Chipkarte 9 aufweist. Im Falle des zusätzlichen dritten Moduls ist dessen Dimensionierung so gewählt, daß es in dem Bereich, in dem die Adapterkarte 8 durch die Führungsschienen 4-2 des Kartenschachts 4-1 der Lese- oder Schreib-/Lesevorrichtung 4 geführt oder gehalten wird, ausgespart ist. Da im Fall des vorliegenden Ausführungsbeispiels die Führungsschienen 4-2 einen vorgegebenen Abstand zwischen Kartenunterseite und Leiterplattenoberfläche innerhalb der Lese- oder Schreib/Lesevorrichtung vorgeben, kann das dritte Modul 8-3 ein Dicke aufweisen, die etwas geringer als dieser vorgegebene Abstand ist.

Die Auswerteeinrichtung 10 ist in dem in Figur 1 dargestellten Ausführungsbeispiel in Form eines PCs 10 realisiert. Der PC 10 weist gegenüber einem herkömmlichen PC zusätzlich eine weitere Lese- oder Schreib-/Lesevorrichtung 12 für Chipkarten auf, die Gegenkontakte zur Kontaktierung der ersten Kontakte 9-5 einer in den Kartenschacht der Leseoder Schreib-/Lesevorrichtung 12 eingebrachten Chipkarte 9 umfaßt. Auf diese Weise können beispielsweise auf der für den gewöhnlichen Betrieb des Geräts 1 vorgesehenen Chipkarte 9 gespeicherte Zugangsberechtigungsdaten über die weitere Lese- oder Schreib-/Lesevorrichtung 12 der Auswerteeinrichtung 10 ausgelesen und dem Prozessor 3-1 des elektrischen Geräts 1 über die Leitungsverbindung 11 zwischen Auswerteeinrichtung 10 und Adapterkarte 8 und weiter die ersten Kontakte 8-5 der Adapterkarte 8, die die ersten Kontakte 8-5 der Adapterkarte kontaktierenden ersten Gegenkontakte 5 der Lese- oder Schreib-/Lesevorrichtung 4 des Geräts und die ersten Leiterbahnen 7-1 zur Auswertung zugeführt werden.

Anstelle von Informationen, die aus der für den gewöhnlichen Betrieb des Geräts bestimmten Chipkarte 9 ausgelesen werden, können analoge Informationen, beispielsweise Zugangsberechtigungsinformationen, auch durch die Auswerteeinrichtung 10 selbst generiert werden. Insbesondere kann es vorgesehen sein, daß von der Auswerteeinrichtung 10 generierte Zugangsberechtigungsinformationen etwa in der Art eines Master-Codes weitergehende Zugriffe auf Bestandteile des elektrischen Geräts 1 oder Geräteverbunds ermöglichen, als dies dem Nutzer aufgrund der auf der Chipkarte 9 gespeicherten Zugangsberechtigungsdaten ermöglicht wird. Auch diese durch die Auswerteinrichtung 10 erzeugten Zugangsberechtigungsinformationen werden dem Gerät über dessen erste Schnittstelle 4, 5 zugeführt.

Schreib- und/oder Lesezugriffe der Auswerteeinrichtung 10 über die Kabelverbindung 11, die weiteren Kontakte 8-6 der Adapterkarte 8, die damit in Verbindung stehenden weiteren Gegenkontakte 6 der Lese- oder Schreib-/Lesevorrichtung 4 und die weiteren Leiterbahnen 7-2 auf die weitere Baugruppe oder Funktionseinheit 3 des elektrischen Geräts 1, oder im Fall eines Geräteverbunds der weiteren Verbundkomponente 3 werden dabei durch die Sperreinrichtung 3-2 nur dann freigegeben, wenn der Zugriff aufgrund der auf der Chipkarte 9 gespeicherten Zugangsberechtigungsdaten als berechtigt erkannt wird.

Ein Schreib- und/oder Lesezugriff auf die weitere Baugruppe/Funktionseinheit 3 des elektrischen Geräts 1 kann beispielsweise zum Austausch oder zur Ergänzung einer zum Betrieb des Geräts 1 erforderlichen Betriebssoftware erforderlich sein, die in der weiteren Baugruppe 3 abgelegt ist. Weiterhin kann ein solcher Zugriff beispielsweise auch für eine Fehlerdiagnose im Falle eines Defekts des Geräts genutzt werden, wozu über die beschriebene zusätzliche Schnittstelle 6, 8-6 dem Gerät 1 bzw. dessen weiterer Baugruppe 3 eine Testsoftware oder Testparameter übermittelt werden und die Reaktionen des Geräts 1 auf die Testsoftware oder Testparameter über die zusätzliche Schnittstelle 6, 8-6 der Auswerteeinrichtung 10 zur Analyse zugeführt werden.

Im Falle der als Geräteverbund realisierten, eingangs skizzierten Audioanlage kann beispielsweise über den Datenbus ein Schreibzugriff von der Auswerteeinrichtung 10 auf den Klangprozessor als weiterer Baugruppe/Funktionseinheit 3 erfolgen, um deren Betriebsparameter, wie etwa Frequenzgänge, Signallaufzeiten zu einzelnen Lautsprechern, Hall-Effekte oder ähnliches, zur Anpassung der Audiowiedergabe an die akustischen Gegebenheiten des Fahrzeuginnenraums anzupassen.

Im Falle der erwähnten, ebenfalls als vernetztes System realisierten Triebstrangsteuerung umfassend Motor- und Getriebesteuerung, Sensoren usw. können beispielsweise beim Betrieb des Fahrzeugs in der Vergangenheit angefallene Betriebszustandsdaten abgefragt werden. Zusätzlich können diese Betriebszustände auch in Abhängigkeit des Nutzers, der durch seine persönliche für den Betrieb des Fahrzeugs benötigte Chipkarte identifizierbar ist, abgefragt werden.

Neben Zugangsberechtigungsdaten können auf der für den gewöhnlichen Betrieb des Geräts 1 bestimmten Chipkarte 9 auch persönliche Daten oder Geräteeinstellungen des Benutzers gespeichert sein, wie etwa im Falle einer Audioanlage etwa bevorzugt eingestellte Rundfunkprogramme, Klangeinstellungen, Anzeigeparameter für die Anzeige des Geräts 1 oder andere Parameter, wobei für eine vollständige Gerätediagnose diese Parameter während des Diagnosevorgangs benötigt werden. Diese werden dem Gerät 1 dann mittels der weiteren Lese- oder Schreib-/Lesevorrichtung über die ersten Kontakte 8-5 der Adapterkarte 8 und die ersten Gegenkontakte 5 der Lese- oder Schreib-/Lesevorrichtung 4 des Geräts in der gleichen Weise, wie im gewöhnlichen Betrieb zugeführt, während gleichzeitig die Auswerteeinrichtung 10 über die beschriebene weitere Schnittstelle 8-6, 6 auf die weitere Baugruppe oder Funktionseinheit 3 des Geräts 1 zugreifen kann.

## Patentansprüche

1. Kommunikationsanordnung zur Informationsübertragung zwischen einer weiteren Baugruppe oder Funktionseinheit (3) eines eine erste Baugruppe oder Funktionseinheit und eine Lese- oder Schreib-/Lesevorrichtung (4) für Chipkarten (9) aufweisenden elektrischen Geräts (1) oder Geräteverbunds und einer Auswertevorrichtung (10),
wobei die Lese- oder Schreib-/Lesevorrichtung (4) erste Gegenkontakte (5) zur Kontaktierung einer erste Kontakte aufweisenden Chipkarte (9) aufweist, wobei die ersten Kontakte mit der ersten Baugruppe oder Funktionseinheit des Geräts (1) oder Geräteverbunds verbunden sind,
wobei die Lese- oder Schreib-/Lesevorrichtung (4) weitere Gegenkontakte (6) aufweist, die elektrisch und räumlich von den ersten Gegenkontakten (5) getrennt und diesen benachbart und in der gleichen Ebene wie die ersten Gegenkontakte (5) angeordnet sind,
wobei eine Adapterkarte (8) mit ersten und weiteren Kontakten vorgesehen ist, wobei erste (8-5) und weitere (8-5) Kontakte auf der Adapterkarte (8) derart angeordnet sind, daß diese bei in die Lese- oder Schreib-/Lesevorrichtung (4) eingeschobener Adapterkarte (8) durch die ersten (5) und die weiteren (6) Gegenkontakte kontaktiert werden,
wobei die Auswerteeinrichtung (10) zum Informationsaustausch mit dem Gerät (1) mit den ersten (8-5) und den weiteren Kontakten (8-6) der Adapterkarte (8) verbunden oder verbindbar ist.

2. Kommunikationsanordnung nach Anspruch 1, **dadurch gekennzeichnet, daß** in der Auswertevorrichtung (10) die gleichen Daten und/oder Softwareroutinen abgelegt sind, wie diese auf der für den gewöhnlichen Betrieb des Geräts (1) vorgesehenen Chipkarte (9) abgelegt sind, und daß diese für das Gerät (1) über die ersten Kontakte (8-4) der Adapterkarte (8) und die Verbindung zwischen Adapterkarte (8) und Auswertevorrichtung (10) zugänglich sind.

3. Komunikationsanordnung nach Anspruch 2, **dadurch gekennzeichnet, daß** die Auswertevorrichtung (10) über eine weitere Lese- oder Schreib-/Lesevorrichtung (12) verfügt, in der dritte Gegenkontakte zur Kontaktierung der ersten Kontakte (9-4) der für den gewöhnlichen Betrieb des Geräts (10) vorgesehenen Chipkarte (9) vorgesehen sind.

4. Kommunikationsanordnung nach Anspruch 3, **dadurch gekennzeichnet, daß** die dritten Gegenkontakte der weiteren Lese- oder Schreib-/Lesevorrichtung (13) mit den entsprechenden ersten Kontakten (8-4) der Adapterkarte (8) verbunden oder verbindbar sind.

5. Kommunikationsanordnung nach einer der vorhergehenden Ansprüche, **dadurch gekennzeichnet, daß** die Auswertevorrichtung (10) eine Diagnosesoftware zur Durchführung einer Diagnose des Geräts (1) aufweist.

6. Kommunikationsanordnung nach einem der vorhergehenden Ansprüche, **dadurch gekennzeichnet, daß** die Auswertevorrichtung (10) einen Massenspeicher aufweist, in dem eine in das Gerät (1), insbesondere dessen weitere Baugruppe 3 oder Funktionseinheit (3) zu überspielende Betriebssoftware oder Betriebssoftwareroutinen gespeichert sind.

7. Verfahren zur Informationsübertragung zwischen einer weiteren Baugruppe oder Funktionseinheit (3) eines eine erste Baugruppe oder Funktionseinheit aufweisenden elektrischen Geräts (1) oder Geräteverbunds und einer Auswertevorrichtung (10),
wobei nach Herstellung einer Verbindung (11) zwischen Adapterkarte (8) und Auswerteeinrichtung (10) durch Eingeben einer Adapterkarte (8) in eine Lese- oder Schreib/Lesevorrichtung (4) eines elektrischen Geräts (1) oder Geräteverbunds und demzufolge Kontaktierung erster (8-5) und weiterer (8-6) auf derselben Oberfläche der Adapterkarte (8) angeordneter Kontakte durch erste (5) und weitere (6) Gegenkontakte der Lese- oder Schreib-/Lesevorrichtung (4) erste Informationen von der ersten Baugruppe oder Funktionseinheit (3-1) über die ersten Gegenkontakte (5) und von der weiteren Baugruppe oder Funktionseinheit (3) weitere Informationen über die weiteren Gegenkontakte (6) der Leseoder Schreib-/Lesevorrichtung (4) von der Auswerteeinrichtung (10) gelesen oder mit dieser ausgetauscht werden.

8. Verfahren nach Anspruch 7 **dadurch gekennzeichnet, daß** die ersten Informationen von einer durch die Auswerteeinrichtung (10) lesbaren, für den gewöhnlichen Betrieb des Geräts verwandten Chipkarte über die ersten Kontakte (8-5) der Adapterkarte (8) und die ersten Gegenkontakte (5) der Leseoder Schreib-/Lesevorrichtung der Geräts (1) in dieses übertragen werden.
